# EUROPÄISCHE PATENTANMELDUNG

(11) **EP 1 637 842 A1**
(43) Veröffentlichungstag der Anmeldung: **22.03.2006**
(21) Anmeldenummer: 05018315.1
(22) Anmeldetag: 23.08.2005
(51) Int. Cl.: G01D 5/245

(54) **Messeinrichtung zum inkrementalen Messen von Positionen, Stellwegen oder Stellwinkeln und mit einer derartigen Messeinrichtung ausgestattetes Flurförderzeug**

(30) Priorität: 26.08.2004 DE 102004041391
(71) Anmelder: Jungheinrich Aktiengesellschaft, 22047 Hamburg (DE)
(72) Erfinder: Hämmerl, Robert Dipl.-Ing(FH), 84098 Hohenthann (DE)
(74) Vertreter: Jordan, Volker Otto Wilhelm

(57) **Zusammenfassung**

Für eine Messeinrichtung zum inkrementalen Messen von Positionen, Stellwegen oder Stellwinkeln unter Berücksichtigung der Bewegungsrichtung, umfassend wenigstens eine erste Sensoranordnung (A) und wenigstens eine zweite Sensoranordnung (B), die mit wenigstens einer relativ zu den Sensoranordnungen beweglichen Teilungsspur (100a) zusammenwirken, um bei einer relativen Bewegung zwischen den Sensoranordnungen einerseits und der Teilungsspur andererseits um eine definierte Phase gegeneinander versetzte, in aufeinander folgenden Impulsen die relative Bewegung repräsentierende und in der Phase die Bewegungsrichtung anzeigende Pulssignale zu liefern, wobei die oder wenigstens eine Teilungsspur (100a) mit einer Teilung ausgeführt ist, die bei der relativen Bewegung das inkrementale Messauflösungsvermögen bestimmende, die Impulse liefernde Bewegungsinkremente repräsentiert, wird vorgeschlagen, dass die oder wenigstens eine Teilungsspur (100a) mit einer weiteren Teilung ausgeführt ist, die bei der relativen Bewegung gegenüber den das inkrementale Messauflösungsvermögen bestimmenden Bewegungsinkrementen größere Bewegungsinkremente repräsentiert.

## Beschreibung

Die Erfindung betrifft eine Messeinrichtung zum inkrementalen Messen von Positionen, Stellwegen oder Stellwinkeln unter Berücksichtigung der Bewegungsrichtung, umfassend wenigstens eine erste Sensoranordnung und wenigstens eine zweite Sensoranordnung, die mit wenigstens einer relativ zu den Sensoranordnungen beweglichen Teilungsspur zusammenwirken, um bei einer relativen Bewegung zwischen den Sensoranordnungen einerseits und der Teilungsspur andererseits um eine definierte Phase gegeneinander versetzte, in aufeinander folgenden Impulsen die relative Bewegung repräsentierende und in der Phase die Bewegungsrichtung anzeigende Pulssignale zu liefern, wobei die oder wenigstens eine Teilungsspur mit einer Teilung ausgeführt ist, die bei der relativen Bewegung das inkrementale Messauflösungsvermögen bestimmende, die Impulse liefernde Bewegungsinkremente repräsentiert. Es wird vor allem an solche Messeinrichtungen gedacht, bei denen die Sensoranordnungen (Einzelsensoren oder Sensorspuren) berührungslos mit der zugeordneten Teilungsspur zusammenwirken. Es sind diverse geeignete Messprinzipien bekannt. Beispielsweise kann die Messung induktiv, kapazitiv, optisch bzw. optoelektronisch oder magnetostriktiv erfolgen. Bei einer als linearer. Weggeber ausgeführten Messeinrichtung ist die Teilungsspur linear bzw. geradlinig ausgeführt, beispielsweise von einem Sensormaßstabbauteil gebildet. Bei einer als Winkel-Weggeber oder Drehgeber ausgeführten Messeinrichtung erstreckt sich die Teilungsspur in einer Umfangsrichtung und ist in der Regel als geschlossene Schleife ausgeführt. Die Teilungsspur kann in diesem Fall von einem Sensormaßstab-Scheibenbauteil gebildet sein. Betreffend eine Messeinrichtung nach dem optischen oder optoelektronischen Messprinzip kann vorgesehen sein, dass die Teilungsspur von den Sensoranordnungen auf optischem Wege in Transmission oder reflektiv erfasst wird.

Regelmäßig sind Messeinrichtungen wie angesprochen mit bezogen auf die Periodizität des Pulssignals um einen Phasenwinkel von 90° gegeneinander versetzten (bezogen auf eine einen Phasenwinkel von 360° entsprechende Periode der Impulse) Sensoranordungungen ausgeführt, um eine Erfassung bzw. Bestimmung der Bewegungsrichtung zu ermöglichen. Im Fachgebiet werden derartige Messeinrichtungen auch als zweikanalige Inkrementalgeber bezeichnet.

Herkömmlich tasten die um den Phasenwinkel gegeneinander versetzten Sensoranordnungen (ggf. Sensorspuren) ein festes, in der Teilungsspur verkörpertes Pulsmuster ab, das entlang der gesamten Erstreckung der Teilungsspur streng periodisch ist, so dass entlang der Teilungsspur alle um einen Stellweg entsprechend einem Phasenwinkel von 360° oder Vielfache davon auseinander liegende Teilungsspurpositionen aus den Pulssignalen selbst nicht voneinander unterschieden werden können und es deswegen bei der Positionsbestimmung, Stellwegbestimmung bzw. Stellwinkelbestimmung darauf ankommt, die von den Sensoranordnungen abgegebenen Impulssignale ordnungsgemäß auszuwerten, die Impulse unter Berücksichtigung der Bewegungsrichtungsinformation gewissermaßen mitzuzählen und über die momentane Position gewissermaßen Buch zu führen.

Sollte aufgrund von Fehlern oder Störungen, beispielsweise in der Elektronik die Pulsauswertung störende Störsignale oder beispielsweise die optische Erfassung der Teilungsspur beeinträchtigende Verschmutzungen oder dergleichen, Impulse nicht richtig mitgezählt werden, so könnte sich über die Zeit ein Fehler in der "Buchführung" akkumulieren, so dass unter Umständen eine deutliche Abweichung zwischen einer tatsächlichen Stellposition und der von der Auswerteelektronik bestimmten Stellposition auftritt. Dies kann zu ernsthaften Problemen, Schäden und ggf. Gefährdungen führen, wie es am Beispiel eines Flurförderzeugs deutlich wird, bei dem es unter Umständen darauf ankommt, beim Beladen und Entladen und Fördern auf Grundlage mittels der Messeinrichtung bestimmte Hubpositionen oder Querverstellpositionen eines Gabelträgers exakt anzufahren.

Man könnte dieses Problem dadurch etwas mildern, dass regelmäßig eine definierte Referenzposition angefahren wird, die beispielsweise durch einen Anschlag oder ein Positionierungsmaß definiert ist, und dass dann die Buchführung der Auswerteelektronik neu initialisiert wird. Dies ist aber für normale Betriebsabläufe unter Umständen störend, in manchen Situationen ohne menschlichen Eingriff gar nicht durchführbar und könnte unter Umständen bei ernsten Störungen zu spät kommen.

Der Erfindung liegt die Aufgabe zugrunde, eine störungs- oder fehlertolerantere Bestimmung momentaner Stellpositionen zu ermöglichen, oder zumindest zu ermöglichen, dass Störungen oder Fehler leicht automatisiert erkannt werden können.

Zur Lösung dieser Aufgabe schlägt die Erfindung für die eingangs angesprochene Messeinrichtung vor, dass die oder wenigstens eine Teilungsspur mit einer weiteren Teilung ausgeführt ist, die bei der relativen Bewegung gegenüber den das inkrementale Messauflösungsvermögen bestimmenden Bewegungsinkrementen größere Bewegungsinkremente repräsentiert.

Nach der Erfindung können wie im Stand der Technik Positionen, insbesondere relative Positionen, Stellweg oder Stellwinkel, auf Grundlage der das inkrementalen Messauflösungsvermögen bestimmenden Teilung und vermittels dieser prinzipiell erfassbarer Bewegungsinkremente im Wege der Buchführung über die auftretenden Impulse erfasst werden. Zusätzlich ist es möglich, auf Grundlage der weiteren Teilung und gegenüber den das inkrementale Messauflösungsvermögen bestimmenden Bewegungsinkrementen größeren Bewegungsinkrementen eine zusätzliche "Buchführung" durchzuführen, auf deren Grundlage die Buchführung über die aufgetretenen kleineren Bewegungsinkremente überprüft und ggf. korrigiert werden kann. Beispielsweise kann vorgesehen sein, dass bei einer Impulse auslösenden Bewegung im Pulssignal einer oder beider Sensoranordnungen auftretenden Pulsmuster in gewissen Phasenwinkelabständen, bezogen auf eine gegebene Stellgeschwindigkeit in gewissen Zeitabständen, jeweils ein Impuls weggelassen oder unterdrückt ist, und zwar auf Grundlage der weiteren Teilung, die in einer entsprechenden Ausgestaltung der Teilungsspur verkörpert sein kann, im Falle einer optischen oder optoelektronischen Erfassung beispielsweise durch eine weggelassene lichtdurchlässige Stelle bzw. einen größeren lichtundurchlässigen Bereich, oder durch eine weggelassene reflektierende Stelle bzw. einen größeren nichtreflektierenden Bereich oder allgemein durch entsprechende Ausgestaltungen eines die Teilungsspur aufweisenden optischen Elements, ggf. Gitters. Entsprechendes ist bei nach anderen Messprinzipien arbeitenden Sensoren möglich, beispielsweise bei kapazitiven Sensoren, die eine Änderung in einer Plattenkapazität messen, um eine Bewegung einer Platte entlang einer Bewegungslinie in der Ebene der Platte oder parallel zu dieser zu erfassen. Hierbei kann die Ausgestaltung so sein, dass gemäß einer größeren Teilung periodisch ein Maximum oder ein Minimum der erfassten Kapazität auftritt, und dass diese Kapazitätsvariation einer kleinteiligeren Kapazitätsänderung oder Kapazitätsmodulation überlagert ist, die das Auflösungsvermögen der Messeinrichtung bestimmt. Entsprechende Modifikationen herkömmlicher Sensoranordnungen bzw. Teilungsspuren für andersartige Messprinzipien sind dem Fachmann ohne weiteres möglich. Beispiele für Messeinrichtungen des Standes der Technik, die nach der Erfindung weiterbildbar sind, sind aus der GB 2 273 567 A bekannt, die eine bekannte optische Linear-Messvorrichtung und eine bekannte kapazitive Linear-Messvorrichtung zeigt.

Erfindungsgemäß können beispielsweise durch gezielte "Fehlimpulse" Fehlerfassungen bzw. fehlerhaft gezählte oder nicht gezählte Impulse zumindest insoweit erkannt werden, dass eine Diskrepanz zwischen der Buchführung über die Impulse einerseits und dem Auftreten des "Fehlimpulses" andererseits erkannt wird. Wird z. B. jeder zwanzigste Impuls als Fehlimpuls (fehlender Impuls) definiert, so erwartet die Auswertesoftware oder Auswerteelektronik für den betreffenden Messkanal, vorzugsweise für beide Messkanäle, nach 19 gezählten Impulsen den Fehlimpuls. Die Stelle, an der der Fehlimpuls auftritt, also an der an sich - ohne die weitere Teilung - ein normaler Impuls auftreten müsste, kann durch eine Impulsflanke im Impulssignal des jeweils anderen Messkanals definiert sein. Hierzu kann man vorsehen, dass für den Phasenversatz zwischen den beiden Sensoranordnungen anstelle des herkömmlichen Phasenwinkelversatzes von 90° ein demgegenüber deutlich größerer Phasenwinkelversatz vorgesehen ist, vorzugsweise ein Phasenwinkelversatz von 90° +/- z x180°, wobei z eine positive ganze Zahl ≥ 1 ist. Auf Grundlage des Fehlimpulses kann eine Neukalibrierung der Buchführung über die Impulse stattfinden oder ― bei großen Diskrepanzen - ein Fehlerzustand erkannt werden, worauf eine entsprechende Fehlermeldung oder ein Fehlersignal ausgegeben werden kann.

Allgemein wird vorgeschlagen, dass bei einer gleichförmigen Relativbewegung die erste und die zweite Sensoranordnung auf Grund der Teilung periodische Pulssignale mit einer eine Periodizität der Teilung repräsentierenden Periodizität liefern. Es wird - wie bei den angesprochenen Beispielen schon angedeutet - daran gedacht, dass bei der gleichförmigen Relativbewegung auf Grund der weiteren Teilung in wenigstens einem der periodischen Pulssignale periodische Abweichungen von der die Periodizität der Teilung repräsentierenden Periodizität auftreten, wobei die Abweichungen eine eine Periodizität der weiteren Teilung repräsentierende Periodizität aufweisen.

Eine zweckmäßige Möglichkeit hierbei ist, dass gegenüber den übrigen Impulsen, die der die Periodizität der Teilung repräsentierenden Periodizität genügen, eine abweichende Impulsform, gegebenfalls eine abweichende lmpulshöhe oder Impulsbreite, oder ein ausgelassener Impuls die Abweichung bildet. Mit dem Begriff "ausgelassener Impuls" ist die schon angesprochene Möglichkeit eines Fehlimpulses oder fehlenden Impulses gemeint. Eine andere Möglichkeit ist, dass gegenüber Impulslücken zwischen den Impulsen, die der die Periodizität der Teilung repräsentierenden Periodizität genügen, eine Impulslücke größerer Lückenbreite die Abweichung bildet. Der Weiterbildungsvorschlag "Fehlimpuls", "fehlender Impuls" oder "ausgelassener Impuls" kann in diesem Zusammenhang auch wie folgt ausgedrückt werden: die die Abweichung bildende Impulslücke kann eine Impulsposition umfassen, die zusammen mit den übrigen Impulsen der die Periodizität der Teilung repräsentierenden Periodizität genügt.

Wie schon angesprochen, kann besonders vorteilhaft vorgesehen sein, dassdie erste und die zweite Sensoranordnung bezogen auf eine einem Phasenwinkel von 360° entsprechende Periode der Impulse, die der die Periodizität der Teilung repräsentierenden Periodizität genügen, derart relativ zur Teilungsspur angeordnet sind, dass bei der gleichförmigen Bewegung im Pulssignal der ersten Sensoranordnung und im Pulssignal des zweiten Sensoranordnung die Abweichungen um einen Phasenwinkel von wenigsten 180° gegeneinander versetzt sind, vorzugsweise um einen Phasenwinkel von 90° +/- z x 180°, wobei z eine ganze Zahl von mindestens 1 ist. Es lässt sich so anhand der Signale der einen Sensoranordnung die relative Phase der Abweichung in den Signalen der anderen Sensoranordnung bestimmen.

Die vorangehend erörterten, sich auf periodische Abweichungen in wenigstens einem der periodischen Pulssignale beziehenden Weiterbildungsvorschläge lassen sich auf Grundlage einer Teilungsspur oder mehrerer Teilungsspuren realisieren, die der ersten bzw. der zweiten Sensoranordnung bzw. noch wenigstens einer zusätzlich vorgesehenen Sensoranordnung zugeordnet sind und die inkrementale Messung dem inkrementalen Messauflösungsvermögen ermöglichen. Diese Teilungsspur bzw. wenigstens eine der hierfür verwendeten Teilungsspuren kann erfindungsgemäß so in regelmäßigen Abständen modifiziert sein, um die periodischen Abweichungen in wenigstens einem der periodischen Pulssignale zu bewirken.

Demgegenüber wird als Alternative vorgeschlagen, dass die wenigstens eine Teilungsspur mit der Teilung ohne die weitere Teilung ausgeführt ist und dass wenigstens eine weitere Teilungsspur vorgesehen ist, die mit der weiteren Teilung ausgeführt ist. Gemäß diesem Weiterbildungsvorschlag ist für die Messkontrolle oder Messreferenz eine eigene, zusätzliche Teilungsspur vorgesehen, die mit der weiteren Teilung ausgeführt ist.

Man kann vorteilhaft vorsehen, dass die weitere Teilungsspur durch eine oder mehrere der ohnehin vorgesehenen Sensoranordnungen,also beispielsweise durch die erste Sensoranordnung oder/und die zweite Sensoranordnung, erfasst wird, so dass die Abweichungen in dem betreffenden Sensorpulssignal auftreten. Eine andere Möglichkeit ist, dass wenigstens eine weitere Sensoranordnung vorgesehen ist, die mit der weiteren Teilungsspur zusammenwirkt und bei der/einer gleichförmigen Relativbewegung auf Grund der weiteren Teilung ein Pulssignal mit einer die Periodizität der weiteren Teilung repräsentierende Periodizität liefert. Gemäß diesem Weiterbildungsvorschlag dient ein zusätzliches Pulssignal als Referenz oder Kontrolle.

Wie schon angesprochen, kann die erfindungsgemäße Messeinrichtung als linearer Weggeber oder Positionsgeber ausgeführt sein, bei dem die Teilungsspur bzw. Teilungsspuren als lineare, sich zwischen zwei Enden erstreckende Teilungsspur bzw. Teilungsspuren ausgeführt ist/sind. Es wurde ferner schon angesprochen, dass die Messeinrichtung als Drehgeber oder Winkelpositionsgeber ausgeführt sein kann, bei dem die Teilungsspur bzw. Teilungsspuren als sich in einer Umfangsrichtung erstreckende, vorzugsweise eine geschlossene Schleife bildende Teilungsspur bzw. Teilungsspuren ausgeführt ist/sind.

Die Erfindung stellt nach einem anderen Aspekt ferner ein Flurförderzeug bereit, mit einem ersten Lasttragbauteil und einem zweiten Lasttragbauteil, welche zur Ausführung einer Förderbewegung relativ zueinander beweglich vorgesehen sind, wobei zur Erfassung der Relativbewegung zwischen den beiden Lasttragbauteilen eine erfindungsgemäße Messeinrichtung vorhanden ist, die direkt zwischen den beiden Lasttragbauteilen oder zwischen einer einem der Lasttragbauteile zugeordneten Antriebskomponente, gegebenenfalls Antriebswelle oder Getriebekomponente, und einer Bezugskomponente des Flurförderfahrzeugs.

Es wird vor allem daran gedacht, dass an einem der Lasttragbauteile (Maßstab-Lasttragbauteil) ein linearer, die Teilungsspur bzw. Teilungsspuren bildender Sensormaßstab und an dem jeweils anderen Lasttragbauteil (Sensor-Lasttragbauteil) die zur Erfassung des Sensormaßstabs ausgebildeten Sensoranordnungen vorgesehen sind.

Ferner wird daran gedacht, dass ein Lasttragbauteil ein Ständer eines Hubgerüsts oder eines Zusatzhubs ist und dass das jeweils andere Lasttragbauteil ein Hubrahmen des Hubgerüsts oder ein Seitenrahmen oder ein Gabelträger des Zusatzhubs ist. Dabei kann vorgesehen sein, dass der Ständer das Sensor-Lasttragbauteil ist und der Hubrahmen oder Gabelträger oder Seitenrahmen das Maßstab-Lasttragbauteil ist.

Die Erfindung wird im Folgenden anhand von in den Figuren gezeigten Ausführungsbeispielen näher erläutert.
- Fig. 1: zeigt schematisch eine Messeinrichtung des Standes der Technik mit zwei Sensoranordnungen und von diesen bei einer gleichförmigen Relativbewegung gelieferten Signalen.
- Fig. 2: zeigt schematisch ein Beispiel einer erfindungsgemäßen Messeinrichtung mit zwei Sensoranordnungen und von diesen bei einer gleichförmigen Relativbewegung gelieferten Signalen.
- Fig. 3: zeigt schematisch ein weiteres Beispiel für eine erfindungsgemäße Messeinrichtung mit drei Sensoranordnungen und von diesen bei einer gleichförmigen Relativbewegung gelieferten Signalen.
- Fig. 4: zeigt in den Teilfiguren Fig. 4a) und Fig. 4b) ein Beispiel für ein Hubgerüst eines Flurförderzeugs, das mit einer linearen Messeinrichtung nach der Erfindung ausgeführt ist.

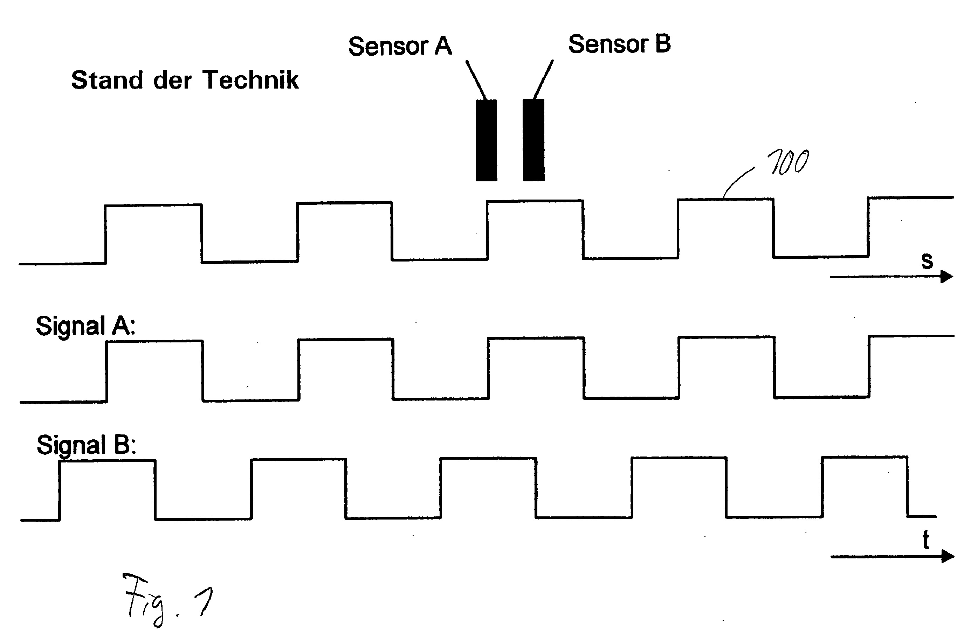

Gemäß Fig. 1 ist ein herkömmlicher zweikanaliger Inkrementalgeber mit zwei hinsichtlich der Phase der von ihnen gelieferten Pulssignalen um 90° versetzten Sensoranordnungen, beispielsweise Sensorspuren, ausgerüstet, die ein festes, durch eine Teilungsspur verkörpertes Pulsmuster 100 abtasten. Die in Fig. 1 gezeigte, die Teilungsspur 100 repräsentierende Linie kann als Darstellung einer sich linear erstreckenden Teilungsspur oder als Abwicklung einer sich in Umfangsrichtung erstreckenden Teilungsspur aufgefasst werden. Die von den Sensoranordnungen A und B gelieferten Signale A und B bilden die Teilungsspur und die Relativbewegung zwischen der Teilungsspur und den Sensoranordnungen ab. Die in Fig. 1 gezeigten Signale treten im Falle einer gleichförmigen Bewegung, also einer Bewegung konstant bleibender Geschwindigkeit oder Winkelgeschwindigkeit ohne Richtungsänderung auf. Aus der relativen Phase zwischen Signal A und B ist die momentane relative Bewegungsrichtung erkennbar.

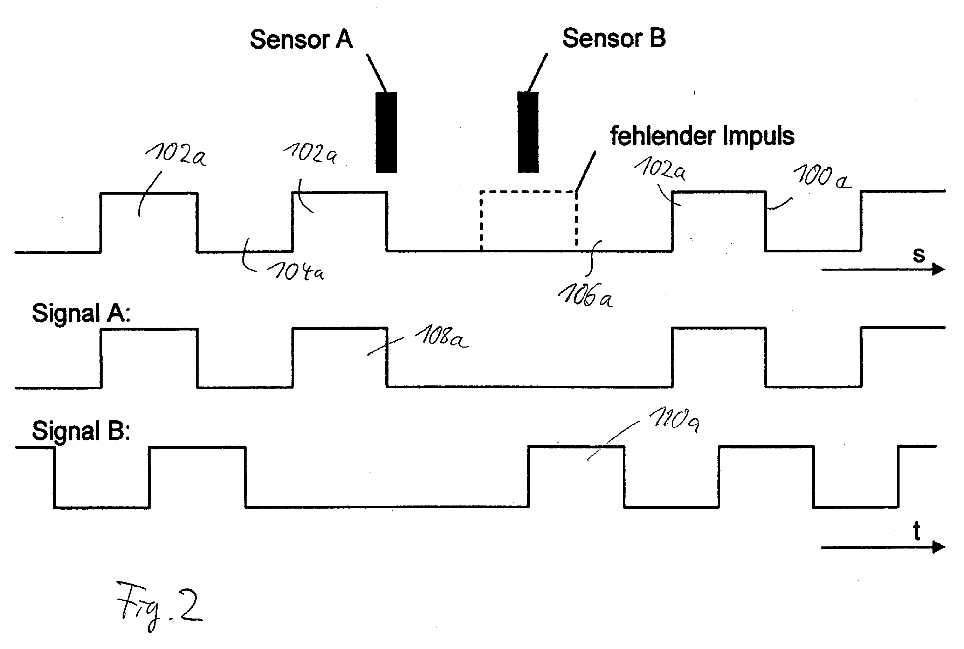

Gemäß dem in Fig. 2 schematisch dargestellten Ausführungsbeispiel ist die Periodizität der Teilungsspur so modifiziert, dass nach einer Anzahl von jeweils einen Impuls gebenden Bereich 102a und zwischen diesen liegenden, keinen Impuls gebenden Bereichen 104a ein gegenüber den Bereichen 104a vergrößerter Bereich 106a auftritt, der keinen Impuls gibt. Ein insoweit "weggelassener" Bereich 102a ist gestrichelt eingezeichnet und als "fehlender Impuls" gekennzeichnet.

Dieses einer kleinteiligeren und einer größerteiligeren Periodizität genügender Teilungsmuster wird von den Sensoranordnungen A und B erfasst und liefert die Signale A und B, in denen sich das Teilungsmuster wiederfindet. Gegenüber dem herkömmlich üblichen Phasenversatz zwischen den Sensoranordnungen entlang der Teilungsspur ist gemäß Fig. 2 ein Phasenversatz von 90° + 180°, also von 270° vorgesehen, so dass die Mitte des "fehlenden Impulses" in dem einen Signal durch die ansteigende bzw. abfallende Flanke eines jeweiligen Impulses 108a bzw. 110a in dem jeweils anderen Signal gekennzeichnet ist, so dass im Bereich des "Fehlimpulses" noch eine Bewegungserkennung möglich ist und auf Grundlage des Fehlimpulses eine exakte Nachkalibrierung der Buchführung über die Stellbewegungen möglich ist. Allgemein ist es zweckmäßig, ein Phasenversatz von 90° + z x 180°, z = ganze Zahl von mindestens 1, vorzusehen.

Durch die gezielt vorgesehenen Fehlimpulse (fehlende Impulse) kann eine fehlerhafte lmpulsbuchführung erkannt werden. Tritt beispielsweise nach jedem 19. Impuls bei ordnungsgemäßer lmpulsabgabe und lmpulserfassung ein fehlender Impuls auf, so kann die Auswertesoftware oder Auswerteelektronik für jeden Messkanal nach 19 gezählten Impulsen den fehlenden Impuls erwarten. Tritt dieser tatsächlich nicht auf, obwohl keine Bewegungsrichtungsumkehr erfasst wurde, so ist ein Fehler in der Impulsabgabe oder Impulserfassung aufgetreten. Man kann vorsehen, dass - solange nur eine kleine Diskrepanz auftritt - auf Grundlage des fehlenden Impulses eine Nachkalibrierung der Impulsauswertung, also gewissermaßen eine Nachführung der Buchführung über die erfassten Impulse und damit der Stellweg- oder Stellwinkelerfassung erfolgt. Zumindest bei größeren Diskrepanzen sollte eine Fehlermeldung oder ein Fehlersignal ausgegeben werden, um angemessene Reaktionen zu ermöglichen, beispielsweise einen menschlichen Eingriff oder eine Kalibrierung anhand einer absoluten Referenz.

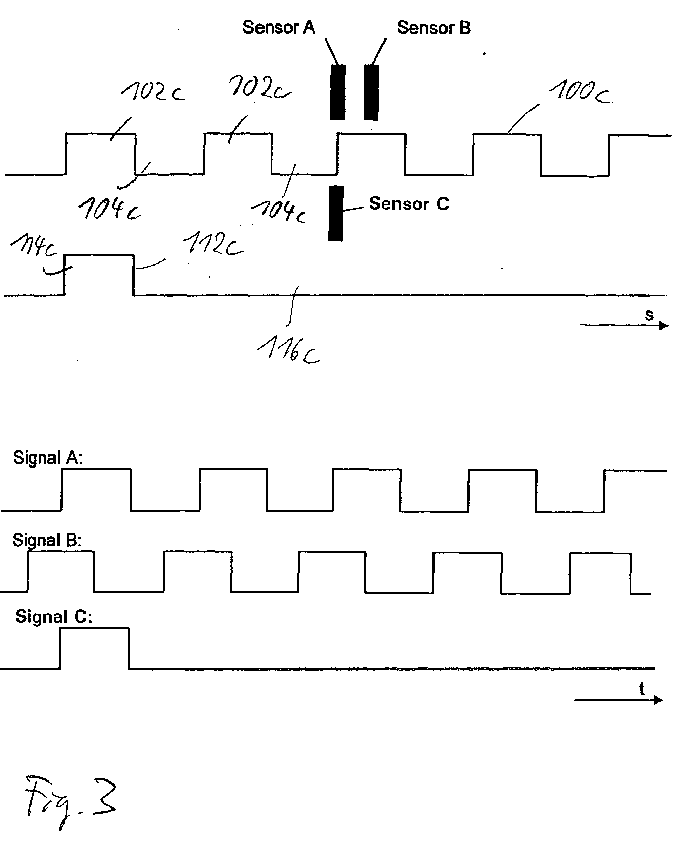

Gemäß dem Ausführungsbeispiel der Fig. 3 entsprechen die Sensoranordnung A und B sowie die resultierenden Signale A und B der Lösung des Standes der Technik gemäß Fig. 1. Zu den Sensoranordnungen A und B ist eine weitere Sensoranordnung C hinzugekommen, die mit einer eigenen Teilungsspur 112c zusammenwirkt und ein Signal C abgibt. Gemäß dem Beispiel der Fig. 3 ist die Teilungsspur 112c mit jeweils einen Impuls gebenden Bereichen 114c ausgeführt, die den Bereichen 102c der Teilungsspur 100c entsprechen, die aber um jeweils eine Pulslücke gebende Bereiche 116c auseinander liegen, die mehreren Bereichen 102c und mehreren Bereichen 104c der Teilungsspur 100c entsprechen.

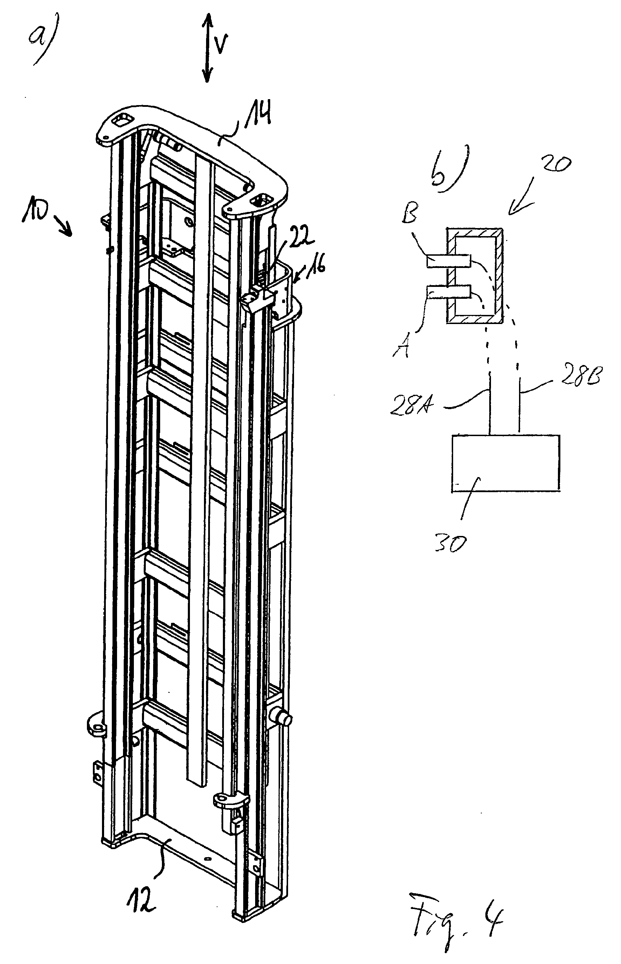

Fig. 4a zeigt ein allgemein mit 10 bezeichnetes Hubgerüst aus einem ortsfest an einem nicht dargestellten Rahmen eines Flurförderzeugs befestigten Ständer 12 und einem daran in Richtung des Doppelpfeils V beweglich geführten Hubrahmen 14.

An einem in Fig. 4a oberen Längsende des Ständers 12 ist eine Befestigungsausbildung 16 zur Befestigung einer in Fig. 4b allgemein mit 20 bezeichneten Sensoreinheit vorgesehen. Der Befestigungsausbildung 16 gegenüberliegend und zu dieser hinweisend ist am Ständer 14 ein Sensormaßstab 22 vorgesehen. Der Sensormaßstab 22 ist gebildet durch Eindrücken von Vertiefungen, welche in Richtung des Doppelpfeils V aufeinander folgend mit gleichem Abstand angeordnet sind. Es handelt sich dabei um einen inkrementalen Sensormaßstab 22. Es kann sich um einen gegenüber dem Ständer 14 gesonderten, an diesem angebrachten oder um einen mit dem Ständer integral, insbesondere einteilig, ausgebildeten Sensormaßstab handeln.

Das Eindrücken der Vertiefungen in eine Seitenfläche des Hubrahmens 14 oder eines Stabbauteils kann in sehr einfacher Weise durch ein auf der Fläche in Richtung des Doppelpfeils V abrollendes Werkzeug erfolgen. Auf dem Umfang des Werkzeuges können Vorsprünge aus gehärtetem Metall in Umfangsrichtung verteilt angeordnet sein, welche sich dann beim Abrollen des Werkzeugs auf der Fläche in das Material des Hubrahmens 14 bzw. Stabbauteils eindrücken. Die Vorgehensweise entspricht dem Rändeln einer Oberfläche.

Zur Realisierung des Erfindungsvorschlags kann das Werkzeug entlang seines auf der Oberfläche abrollenden Umfangs so ausgeführt sein, dass in gewissen Winkelabständen oder nur an einer Winkelposition ein Vorsprung weggelassen oder in Umfangsrichtung breiter ausgeführt ist, so dass in regelmäßigen Abständen entsprechende Modifikationen im Vertiefungsmuster des Sensormaßstabs 22 resultieren. Diese Modifikationen können sich beispielsweise als "fehlende Impulse" in Pulssignalen der Sensoreinheit zeigen. Es wird auf Fig. 2 und die zugehörigen vorstehenden Ausführungen verwiesen.

Die Sensoreinheit 20 umfasst zwei Sensoren A und B, die die von den Vertiefungen und dazwischen liegenden Erhöhungen gebildete Teilungsspur des Sensormaßstabs 22, beispielsweise berührungslos, etwa auf optischem Wege, oder auch berührend auf mechanische Weise abtasten. Über Datenleitungen 28A und 28B werden Erfassungssignale der Sensoren zu einer Steuer- oder Rechnereinheit 30 übertragen, die die Impulse unter Berücksichtigung der sich aus der Phase ergebenden Richtungsinformation zählt und die Zählergebnisse anhand der in den Signalen auftretenden Impulslücken überprüft.

Die Sensoren A und B bzw. die Sensoreinheit 20 kann auf geeignete Weise relativ zum Sensormaßstab geführt sein, um für eine geeignete Erfassungsgenauigkeit zu sorgen. Es wird beispielsweise auf die DE 103 14 795 A1 und - demgegenüber bevorzugt - auf die am 08.07.2004 eingereichte deutsche Patentanmeldung Nr. 10 2004 033 170.7 der Anmelderin verwiesen. Die hieraus entnehmbaren Lösungen können nach den Erfindungsvorschlägen zweckmäßig weitergebildet werden.

## Patentansprüche

1. Messeinrichtung zum inkrementalen Messen von Positionen, Stellwegen (S) oder Stellwinkeln unter Berücksichtigung der Bewegungsrichtung, umfassend wenigstens eine erste Sensoranordnung (A) und wenigstens eine zweite Sensoranordnung (B), die mit wenigstens einer relativ zu den Sensoranordnungen beweglichen Teilungsspur (100a; 100c) zusammenwirken, um bei einer relativen Bewegung zwischen den Sensoranordnungen (A, B) einerseits und der Teilungsspur (100a; 100c) andererseits um eine definierte Phase gegeneinander versetzte, in aufeinander folgenden Impulsen die relative Bewegung repräsentierende und in der Phase die Bewegungsrichtung anzeigende Pulssignale zu liefern,
wobei die oder wenigstens eine Teilungsspur mit einer Teilung ausgeführt ist, die bei der relativen Bewegung das inkrementale Messauflösungsvermögen bestimmende, die Impulse liefernde Bewegungsinkremente repräsentiert,
**dadurch gekennzeichnet,**
**dass** die oder wenigstens eine Teilungsspur (100a; 112c) mit einer weiteren Teilung ausgeführt ist, die bei der relativen Bewegung gegenüber den das inkrementale Messauflösungsvermögen bestimmenden Bewegungsinkrementen größere Bewegungsinkremente repräsentiert.

2. Messeinrichtung nach Anspruch 1, **dadurch gekennzeichnet, dass** bei einer gleichförmigen Relativbewegung die erste (A) und die zweite (B) Sensoranordnung auf Grund der Teilung periodische Pulssignale mit einer eine Periodizität der Teilung repräsentierenden Periodizität liefern.

3. Messeinrichtung nach Anspruch 2, **dadurch gekennzeichnet, dass** bei der gleichförmigen Relativbewegung auf Grund der weiteren Teilung in wenigstens einem der periodischen Pulssignale periodische Abweichungen von der die Periodizität der Teilung repräsentierenden Periodizität auftreten, wobei die Abweichungen eine eine Periodizität der weiteren Teilung repräsentierende Periodizität aufweisen.

4. Messeinrichtung nach Anspruch 3, **dadurch gekennzeichnet, dass** gegenüber den übrigen Impulsen, die der die Periodizität der Teilung repräsentierenden Periodizität genügen, eine abweichende Impulsform, gegebenfalls eine abweichende Impulshöhe oder Impulsbreite, oder ein ausgelassener Impuls die Abweichung bildet.

5. Messeinrichtung nach Anspruch 3 oder 4, **dadurch gekennzeichnet, dass** gegenüber Impulslücken zwischen den Impulsen, die der die Periodizität der Teilung repräsentierenden Periodizität genügen, eine Impulslücke größerer Lückenbreite die Abweichung bildet.

6. Messeinrichtung nach Anspruch 5, **dadurch gekennzeichnet, dass** die die Abweichung bildende Impulslücke eine Impulsposition umfasst, die zusammen mit den übrigen Impulsen der die Periodizität der Teilung repräsentierenden Periodizität genügt.

7. Messeinrichtung nach einem der Ansprüche 3 bis 6, **dadurch gekennzeichnet, dass** die erste (A) und die zweite (B) Sensoranordnung bezogen auf eine einem Phasenwinkel von 360° entsprechende Periode der Impulse, die der die Periodizität der Teilung repräsentierenden Periodizität genügen, derart relativ zur Teilungsspur (100a) angeordnet sind, dass bei der gleichförmigen Bewegung im Pulssignal der ersten Sensoranordnung (A) und im Pulssignal des zweiten Sensoranordnung (B) die Abweichungen um einen Phasenwinkel von wenigsten 180° gegeneinander versetzt sind, vorzugsweise um einen Phasenwinkel von 90° +/- z x 180°, wobei z eine ganze Zahl von mindestens 1 ist.

8. Messeinrichtung nach Anspruch 1 oder 2, **dadurch gekennzeichnet, dass** die wenigstens eine Teilungsspur (100c) mit der Teilung ohne die weitere Teilung ausgeführt ist und dass wenigstens eine weitere Teilungsspur (112c) vorgesehen ist, die mit der weiteren Teilung ausgeführt ist.

9. Messeinrichtung nach Anspruch 8, **dadurch gekennzeichnet, dass** wenigstens eine weitere Sensoranordnung (C) vorgesehen ist, die mit der weiteren Teilungsspur (112c) zusammenwirkt und bei der/einer gleichförmigen Relativbewegung auf Grund der weiteren Teilung ein Pulssignal mit einer die Periodizität der weiteren Teilung repräsentierende Periodizität liefert.

10. Messeinrichtung nach einem der Ansprüche 1 bis 9, ausgeführt als linearer Weggeber, bei dem die Teilungsspur bzw. Teilungsspuren als lineare, sich zwischen zwei Enden erstreckende Teilungsspur bzw. Teilungsspuren ausgeführt ist/sind.

11. Messeinrichtung nach einem der Ansprüche 1 bis 9, ausgeführt als Drehgeber, bei dem die Teilungsspur bzw. Teilungsspuren als sich in einer Umfangsrichtung erstreckende, vorzugsweise eine geschlossene Schleife bildende Teilungsspur bzw. Teilungsspuren ausgeführt ist/sind.

12. Flurförderzeug mit einem ersten Lasttragbauteil (12) und einem zweiten Lasttragbauteil (14), welche zur Ausführung einer Förderbewegung relativ zueinander beweglich vorgesehen sind, wobei zur Erfassung der Relativbewegung zwischen den beiden Lasttragbauteilen (12, 14) eine Messeinrichtung nach einem der vorhergehenen Ansprüche vorhanden ist, die direkt zwischen den beiden Lasttragbauteilen oder zwischen einer einem der Lasttragbauteile zugeordneten Antriebskomponente, gegebenenfalls Antriebswelle oder Getriebekomponente, und einer Bezugskomponente des Flurförderfahrzeugs.

13. Flurförderzeug nach Anspruch 12, **dadurch gekennzeichnet, dass** an einem der Lasttragbauteile (14) (Maßstab-Lasttragbauteil) ein linearer, die Teilungsspur bzw. Teilungsspuren bildender Sensormaßstab (22) und an dem jeweils anderen Lasttragbauteil (12) (Sensor-Lasttragbauteil) die zur Erfassung des Sensormaßstabs (22) ausgebildeten Sensoranordnungen (24) vorgesehen sind.

14. Flurförderzeug nach Anspruch 12 oder 13, **dadurch gekennzeichnet, dass** ein Lasttragbauteil (12) ein Ständer (12) eines Hubgerüsts (10) oder eines Zusatzhubs ist und dass das jeweils andere Lasttragbauteil (14) ein Hubrahmen (14) des Hubgerüsts (14) oder ein Seitenrahmen oder ein Gabelträger des Zusatzhubs ist.

15. Flurförderzeug nach Anspruch 14, **dadurch gekennzeichnet, dass** der Ständer (12) das Sensor-Lasttragbauteil (12) ist und der Hubrahmen (14) oder Gabelträger oder Seitenrahmen das Maßstab-Lasttragbauteil (14) ist.
